# EUROPÄISCHE PATENTSCHRIFT

(11) **EP 0 701 495 B1**
(45) Veröffentlichungstag und Bekanntmachung des Hinweises auf die Patenterteilung: **12.03.1997**
(21) Anmeldenummer: 94914345.7
(22) Anmeldetag: 10.05.1994
(51) Int. Cl.: B23B 27/04

(54) **STECHDREHWERKZEUG**
RECESSING TURNING TOOL
OUTIL DE TOURNAGE A SAIGNER

(30) Priorität: 03.06.1993 DE 4318479
(43) Veröffentlichungstag der Anmeldung: 20.03.1996
(73) Patentinhaber: Widia GmbH, 45145 Essen (DE)
(72) Erfinder: HINTZE, Wolfgang, D-45138 Essen (DE); RUTHER, Günther, D-45768 Marl (DE)
(74) Vertreter: Vomberg, Friedhelm, Dipl.-Phys.
(86) Internationale Anmeldenummer: DE9400561
(87) Internationale Veröffentlichungsnummer: WO9429054

(56) Entgegenhaltungen:
- EP-A- 0 245 225
- EP-A- 0 307 563
- WO-A-91/08071

## Beschreibung

Die Erfindung betrifft ein Stechdrehwerkzeug, insbesondere einen Schneidkörper zur lösbaren Fixierung in einem Halter, mit einer stirnseitigen Hauptschneidkante und zwei Nebenschneidkanten und einer gekrümmt ausgebildeten Spanfläche.

Ein solcher Schneideinsatz mit einem in senkrechter Richtung zur Hauptschneidkante in hauptschneidkantenferneren Bereichen gegenüber der Hauptschneidkantenebene gegebenen Anstiegsbereich, der zu den Seitenflanken hin jeweils Maxima gegenüber dem mittleren Bereich aufweist, ist beispielsweise aus der EP 0 416 900 A2 bekannt. Generell besteht bei Schneideinsätzen die Zielsetzung, den ablaufenden Span zu formen und zu versteifen, damit er in schneidkantenferneren Bereichen leicht brechen und ohne die Gefahr einer Schädigung des Werkstückes oder des Schneideinsatzes abgeführt werden kann. Möglichst soll die Bildung, Formung und Lenkung des Spanes reibungsarm erfolgen, um den Verschleiß der Spanfläche bzw. der Spanformelemente auf dem Schneideinsatz zu minimieren. In diesem Zusammenhang sollen die Reibungskräfte möglichst gering sein, da diese zu einer starken Erwärmung des Schneideinsatzes führen. Um hier eine Optimierung zu schaffen, besitzt der Schneideinsatz nach der EP 0 416 900 A2 eine stirnseitige Hauptschneidkante, die konkav gekrümmt verläuft und achsensymmetrisch zu einer Werkzeuglängsachse ausgeformt ist. Die Hauptschneidkante besitzt einen abgesenkten mittleren Bereich. Die Spanfläche enthält in den Randbereichen jeweilige schaufelförmige Anstiegsflanken, die sich in Spanablaufrichtung erweitern, stufenförmig in einen zweiten Bereich mit seitlich geneigten Flanken übergehen und in Spitzen enden. Mit dem beschriebenen Werkzeug soll der Span abgehoben und durch jeweils seitliche Stauchung versteift werden.

Die WO 91/08071 (nächstliegender Stand der Technik) beschreibt ein Stechdrehwerkzeug, bei dem die Freifläche der Stechschneide zur Bildung eines in der Ebene der Spanfläche der Stechschneide liegenden Einstellwinkels einen Winkel ()±90° mit der in Stechvorschubrichtung verlaufenden vertikalen Werkzeugmittellängsebene einschließt. Die Stechschneide weist zwischen ihren beidseitigen Endbereichen einen ausgemuldeten Mittelbereich mit einer zu den beiden Endbereichsschneiden im wesentlichen parallelen Mittelbereichsschneide auf. Die Verbindungsschneiden zwischen den Endbereichsschneiden und der Mittelbereichsschneide bilden einen sich zum Schneidkörper hin schließenden Flankenwinkel, wobei die der in Stechvorschubrichtung vorauseilenden Endbereichsschneide zugewandte Verbindungsschneide einen Neigungswinkel mit der Endbereichsschneide bildet, der größer ist als der Gegenneigungswinkel zwischen der anderen Verbindungsschneide und der in Stechvorschubrichtung nacheilenden Endbereichsschneide. Hiermit soll erreicht werden, daß der aus dem Einstellwinkel der Stechschneide resultierende Abdrängedruck kompensiert wird, andererseits jedoch auch die Spanbildung in der Stechnut im Sinne einer leichten, sicheren Spanabfuhr begünstigt wird.

Die US-A-4 776 733 beschreibt ein Schneidwerkzeug mit einem abgesenkten mittleren Schneidenteil, das konkav geformt ist. Die Freifläche besitzt einen Vorsprung, der konvex gekrümmt ist und der sich symmetrisch zu einer Freiflächenlängsmittelachse zu beiden Seiten erstreckt. Die Spanfläche selbst weist beidseitig an den Rändern gegenüber der mittleren abgesenkten Spanmulde Flankenbereiche auf, die einer Spanführung dienen sollen. Die seitlichen Führungsflanken sind jedoch nur beschränkt in der Lage, den ablaufenden Span stabil zu führen.

Es ist daher Aufgabe der vorliegenden Erfindung, ein Stechdrehwerkzeug zu schaffen, das eine Spanflächengeometrie mit verbesserter Spanführung aufweist, ferner sollen insbesondere die Schneidecken zusätzlich stabilisiert und die maximale Dehnung erhöht werden.

Diese Aufgabe wird durch den Stecheinsatz nach Anspruch 1 gelöst. Durch die erfindungsgemäß sich an die Hauptschneidkante anschließende verdrillte Fase, deren Fasenwinkel von jeder der seitlichen Ecken zur Schneidkantenmitte hin zunimmt wird eine verbesserte versteifung des ablaufenden Spanes erreicht. Durch die seitlichen Maxima erfährt der ablaufende Span zusätzlich eine seitliche Führung. Die Spanflächenquerschnittsform ist in Spanablaufrichtung über einen ersten schneidkantennahen und/oder einen zweiten im Anstiegsbereich liegenden Spanablaufbereich konstant, kann sich jedoch im übrigen Bereich verändern.

Bevorzugte Weiterbildungen der Erfindung sind in den Unteransprüchen 2 bis 10 beschrieben.

Nach einer Weiterbildung der Erfindung verläuft die Querschnittskontur spiegelsymmetrisch zu einer Hauptschneidkantenmittelnormalen (Werkzeuglängsachse). Die Spanfläche geht in Spanablaufrichtung schließlich in eine Spanformstufe über, die ein abgesenktes Mittelteil und im Randbereich demgegenüber höherliegende Bereiche aufweist.

Will man die Spanstauchung verstärken, werden senkrecht zur Hauptschneidkante die zum abgesenkten Mittelteil der Spanfläche abfallenden seitlichen Flanken in Spanablaufrichtung aufeinander zuwandern und den Mittelbereich verjüngen. Die Verjüngung beträgt vorzugsweise bei Stechbreiten zwischen 2 mm und 12 mm zwischen 0.3 mm und 3 mm oder 5 % bis 25 % der Stechbreite (L). Der Verjüngungsbereich beginnt in einem Abstand von der Hauptschneidkante von 0 mm bis 4 mm oder bis zu 30 % der Stechbreite (L) und/oder erstreckt sich über eine Mindestlänge von 0.3 mm bis 5 mm oder 10 % bis 40 % der Stechbreite (L).

Nach einer weiteren Ausgestaltung der Erfindung ist die Hauptschneidkante geradlinig, leicht konkav oder leicht konkav mit abgesenktem Mittelbereich ausgebildet oder verläuft in konvexen Krümmungen im Schneideckenbereich zu konkaven Krümmungen im oder zum abgesenkten Mittelbereich hin.

Die Spanfläche steigt in Spanablaufrichtung zumindest in schneidkantenferneren Bereichen stetig an. In diesen Bereichen ändert sich nach einer konkreten Ausführungsform der Erfindung die Spanfläche in Spanablaufrichtung hinsichtlich ihrer Querschnittskontur, die gleichbleibend ist, nicht mehr. Damit erlangt man eine idealebg Spanführung über die gesamte Spanablauflänge, so daß der ablaufende Span bis zu seinem Bruch durch das Stechdrehwerkzeug geführt ist. Die Spanfläche steigt an den Randseiten, senkrecht zur Hauptschneidkante betrachtet, zunächst an, durchläuft dann ein Minimum und steigt weiter bis zu einer Spanformstufe an. In entsprechender Weise fällt die Spanfläche vorzugsweise im mittleren Bereich zunächst kontinuierlich ab (d.h., der Fasenwinkel ist positiv), erreicht ein Minimum und steigt dann anschließend wieder an. Hierbei verläuft wenigstens ein Teil der abfallenden Flanke der Spanfläche senkrecht zur Hauptschneidkante betrachtet geradlinig.

Weiterhin ist insbesondere der Fasenwinkel kontinuierlich zunehmend von der Schneidecke zur Schneidkantenmitte hin ausgebildet. Hierdurch werden scharfkantige Übergänge vermieden und gleichzeitig der Span gleichmäßig zur Schneidkantenmitte hin aufgeworfen. Vorzugsweise liegt die Zunahme zwischen 2° und 20° auf 1/10 bis 1/2 der Stechbreite (Hauptschneidkantenlänge). Der Fasenwinkel kann an den seitlichen Ecken zwischen -30° und +20° betragen, so daß von einer Ecke, d.h. dem Übergang einer Nebenschneide zur Hauptschneide bis zur Hauptschneidkantenmitte der Fasenwinkel von negativen zu absolut kleineren negativen Werten oder von negativen zu positiven Winkelwerten oder von positiven Winkelwerten zu stärkerer positiver Neigung verändert werden kann. Bevorzugt wird jedoch eine Verdrallung, bei der der Fasenwinkel von der Ecke zur Schneidkantenmitte von einem negativen Wert zu einem positiven Wert geändert wird.

Nach einer weiteren bevorzugten Ausgestaltung liegt die Zunahme bei 8° bis 18° auf 1/10 bis 1/5 der Stechbreite.

Nach einer weiteren Ausgestaltung der Erfindung haben jeweils in gleichem Abstand von der Schneidkantenmitte auf verschiedenen Seiten liegende Fasenwinkel unterschiedliche Werte, daß heißt, das Werkzeug ist in bezug auf eine Schneidkantennormale asymmetrisch. Vorzugsweise liegt die Differenz der Werte jeweiliger Fasenwinkel zwischen 1° und 10°, insbesondere zwischen 3 und 6°. Vorzugsweise wird diese Ausgestaltung bei Einstellwinkeln der Stechschneide ungleich 90° angewendet.

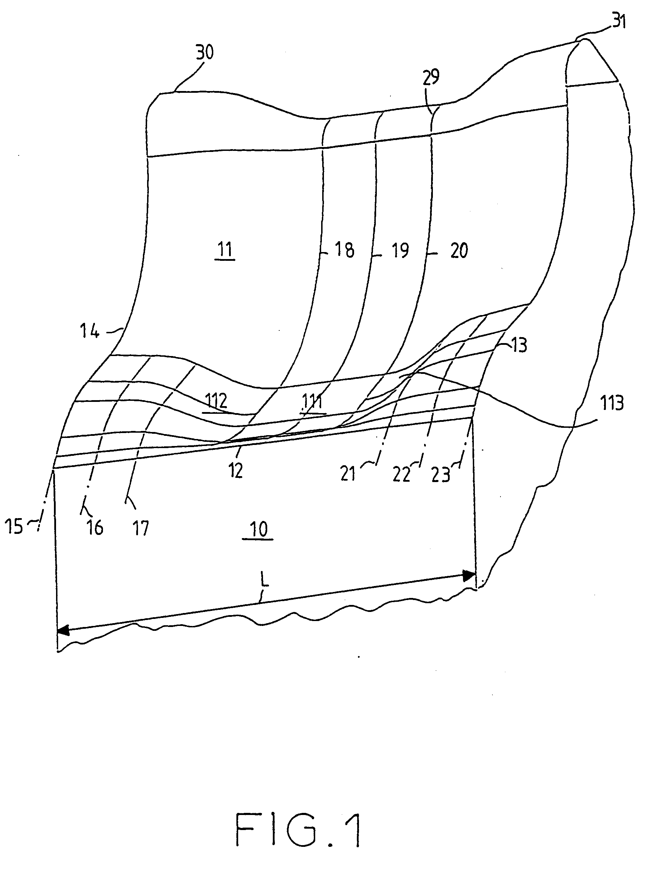

Ein Ausführungsbeispiel der Erfindung ist in den Zeichnungen dargestellt. Es zeigen
- Fig. 1: eine perspektivische Ansicht eines erfindungsgemäßen Stechdrehwerkzeuges,
- Fig. 2: eine Seitenansicht des Stechdrehwerkzeuges nach Fig. 1.
- Fig. 3: eine Draufsicht auf eine weitere Ausführungsform eines Stecheinsatzes

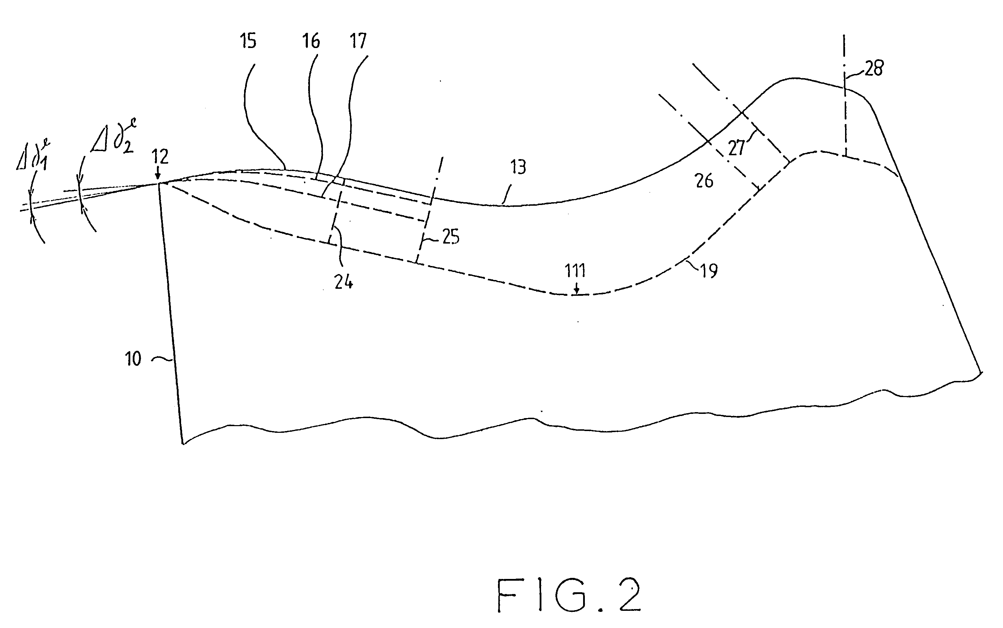

Das dargestellte Stechdrehwerkzeug besitzt eine jeweils die Freifläche 10 und die Spanfläche 11 begrenzende stirnseitige Schneidkante 12 sowie Nebenschneidkanten 13 und 14, die sich etwa im rechten Winkel zur Hauptschneidkante 12 erstrecken. In den Randbereichen (siehe Linien 15 und 23) mündet die Spanfläche in einem negativen Fasenwinkel auf die Schneidkante 12. Gegenüber den Linien 16 und 17 nimmt der Fasenwinkel kontinuierlich zu, wie dies anhand der Werte Δγ₁ und Δγ₂ (siehe Fig. 2) dargestellt ist. Der Anstieg beträgt 2° bis 20° auf 1/10 bis der Hälfte der gesamten Hauptschneidkantenlänge L. Im mittleren Bereich, d.h. im Bereich der Linien 18, 19 und 20, ist der Fasenwinkel an der Schneidkante positiv. Die Linien 21, 22 und 23 entsprechen den Linien 17, 16 und 15 in der genannten Reihenfolge.

Alternativ hierzu kann der Schneideinsatz auch asymmetrisch ausgebildet sein, derart, daß die Fasenwinkel der Linien 15 und 23 ebenso unterschiedlich sind wie die der Linien 16 und 22 bzw. 17 und 21.
Die Spanfläche besitzt eine zentrale Mulde 111, die unterhalb der durch die Schneidkante 12 bestimmten Ebene liegt und von der ausgehend zu jeder Seite hin Flanken 112 und 113 auf jeweilige Maxima am Rand ansteigen. Etwa ab der zur Schneidkante 12 parallel liegenden Ebene 24 bis zur Ebene 25 und ab Ebene 26 bis zur Ebene 27 ändert sich der Spanflächenquerschnitt nicht.
Das heißt, daß in den genannten Bereichen die seitlichen Maxima erhalten bleiben. Diese Maxima dienen der Spanführung, wobei sich der Abstand der seitlichen Flanken 112 und 113 zumindest nicht ändert, allenfalls eine Verjüngung, d.h. schmaler werdendes Mittelteil, zulässig ist.

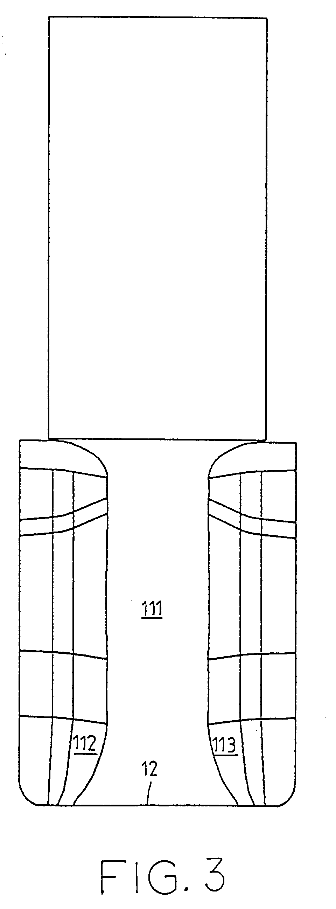

Eine sich an die Schneidkante 12 unmittelbar anschließende Verjüngung des mittleren Bereiches bzw. der aufeinanderzulaufenden Flanken 112 und 113 zeigt Fig. 3.

Außer den dargestellten Ausführungsformen sind auch unterschiedlich geformte Seitenbereiche mit verschiedenen Flankenbreiten, -winkeln und Spanflächenerhöhungen - auch in Form von Spanformelementen wie Längsrippen - möglich.

## Patentansprüche

1. Stechdrehwerkzeug, insbesondere Schneidkörper zur lösbaren Fixierung in einem Halter, mit einer stirnseitigen Hauptschneidkante (12) und zwei Nebenschneidkanten (13, 14), einer gekrümmt ausgebildeten Spanfläche (11) mit einem in Spanablaufrichtung zur Hauptschneidkantenebene oder in bezug auf einen abgesenkten Spanflächenbereich gegebenen Anstiegsbereich und einem Spanflächenquerschnitt senkrecht zur Spanablaufrichtung, der zumindest über einen Teil der Spanablaufstrecke zu den Seitenflanken (112, 113) hin jeweils Maxima gegenüber dem mittleren Bereich (111) aufweist,
**dadurch gekennzeichnet,**
daß sich an die Hauptschneidkante (12) eine verdrillte Fase anschließt, deren Winkel von jeder der seitlichen Ecken zur Schneidkantenmitte hin zunimmt, und daß die Spanflächenquerschnittsform in Spanablaufrichtung über einen ersten schneidkantennahen und/oder einen zweiten im Anstiegsbereich liegenden Spanablaufbereich konstant ist, sich im übrigen Bereich jedoch verändern kann.

2. Stechdrehwerkzeug nach Anspruch 1, dadurch gekennzeichnet, daß die Querschnittskontur symmetrisch zu einer Hauptschneidkantenmittelnormalen verläuft und/oder daß die Spanfläche in Spanablaufrichtung in eine Spanformstufe (29) übergeht, die ein abgesenktes Mittelteil und im Randbereich demgegenüber höherliegende Bereiche (30, 31) aufweist.

3. Stechdrehwerkzeug nach einem der Ansprüche 1 oder 2, dadurch gekennzeichnet, daß die zum abgesenkten Mittelbereich (111) der Spanfläche abfallenden seitlichen Flanken (112, 113) in Spanablaufrichtung aufeinander zuwandern und den Mittelbereich (111) verjüngen, wobei vorzugsweise die Verjüngung bei Stechbreiten zwischen 2 mm und 12 mm zwischen 0.3 mm und 3 mm oder 5 % bis 25 % der Stechbreite (L) beträgt und/oder der Verjüngungsbereich in einem Abstand von der Hauptschneide von 0 mm bis 4 mm oder bis zu 30 % der Stechbreite (L) beginnt und/oder sich über eine Mindestlänge von 0.3 mm bis 5 mm oder 10 % bis 40 % der Stechbreite (L) erstreckt.

4. Stechdrehwerkzeug nach einem der Ansprüche 1 bis 3, dadurch gekennzeichnet, daß die Hauptschneidkante (12) geradlinig, leicht konkav , leicht konkav mit abgesenktem Mittelbereich oder aus konvexen Krümmungen im Schneideckenbereich zu konkaven Krümmungen im oder zum abgesenkten Mittelbereich hin verläuft.

5. Stechdrehwerkzeug nach einem der Ansprüche 1 bis 4, dadurch gekennzeichnet, daß die Spanfläche (11) in Spanablaufrichtung zumindest in schneidkantenferneren Bereichen stetig ansteigt und/oder daß die Spanfläche (11) an den Randseiten senkrecht zur Hauptschneidkante betrachtet zunächst ansteigt, dann ein Minimum durchläuft und schließlich bis zu einer Spanformstufe wiederum ansteigt.

6. Stechdrehwerkzeug nach einem der Ansprüche 1 bis 5, dadurch gekennzeichnet, daß die Spanfläche (11) im mittleren Bereich, senkrecht zur Hauptschneidkante betrachtet, zunächst kontinuierlich abfällt, ein Minimum durchläuft und schließlich bis zu einer Spanformstufe wiederum ansteigt, wobei vorzugsweise wenigstens ein Teil der abfallenden Flanke der Spanfläche (11), in Spanablaufrichtung betrachtet, geradlinig verläuft.

7. Stechdrehwerkzeug nach einem der Ansprüche 1 bis 6, dadurch gekennzeichnet, daß der Fasenwinkel von den Seiten zur Schneidkantenmitte hin kontinuierlich zunimmt, wobei vorzugsweise die Zunahme Δγ zwischen 2° und 20° auf 1/10 bis 1/2 der Stechbreite (L),vorzugsweise 8° bis 18° auf 1/10 bis 1/5 der Stechbreite (L) beträgt.

8. Stechdrehwerkzeug nach Anspruch 7, dadurch gekennzeichnet, daß der Fasenwinkel an den seitlichen Ecken zwischen -30° und +20°, vorzugsweise zwischen -15° und +5° liegt, wobei sich der Fasenwinkel vorzugsweise von der Ecke zur Schneidkantenmitte von einem negativen Wert zu einem positiven Wert ändert.

9. Stechdrehwerkzeug nach einem der Ansprüche 1 bis 8, dadurch gekennzeichnet, daß jeweils in gleichem Abstand von der Schneidkantenmitte auf verschiedenen Seiten liegende Fasenwinkel unterschiedliche Werte haben, wobei vorzugsweise die Differenz der Werte zwischen 1° und 10°, vorzugsweise 3° und 6° haben, insbesondere bei Einstellwinkeln der Stechschneide ungleich 90° angewendet.

10. Stechdrehwerkzeug nach einem der Ansprüche 1 bis 9, dadurch gekennzeichnet, daß die Spanfläche ein oder mehrere Spanformelemente aufweist, vorzugsweise eine Mittelrippe. deren Längsachse sich in Richtung einer Schneidkantennormalen erstreckt.

## Claims

1. A recessing turning tool, in particular a cutting body for releasable mounting in a holder, having at an end face a main cutting edge (12) and two side cutting edges (13, 14), a curved cutting face (11) with a region rising in the chip-travel direction relative to the main-cutting edge plane or relative to a recessed cutting-surface region and a cutting-surface cross section perpendicular to the chip-travel direction which has at least over a portion of the chip-travel region to the side flanks (112, 113) maxima relative to the central region (111),
characterized in that a twisted land immediately adjacent to the main cutting edge (12) whose angle increases from each of the side corners to the center of the cutting edge, and that the cutting-surface cross-sectional shape is constant in the chip-travel direction at a first region near the cutting edge and/or at a second chip-travel region lying in the rising region but which can change in the remaining regions.

2. The recessing turning tool according to claim 1, characterized in that the cross-sectional shape runs symmetrically to a perpendicular to the center of the main cutting edge and/or that the cutting face passes over in the chip-travel direction into a chip-shaping step (29) which has a recessed central part and relative thereto in the edge regions higher regions (30, 31).

3. The recessing turning tool according to one of claims 1 or 2, characterized in that the side flanks (112, 113) descending laterally relative to the central recessed region (111) of the cutting face converge relative to one another in the chip-travel direction and narrow the central region (111), whereby preferably the narrowing with recessing widths between 2 mm and 12 mm lies between 0,3 mm and 3 mm or 5 % to 25 % of the recessing width (L) and/or the narrowed region starts at a spacing from the main cutting edge of from 0 mm to 4 mm or up to 30 % of the recessing width (L) and/or extends over a minimal length from 0,3 mm to 5 mm or 10 % to 40 % of the recessing width (L).

4. The recessing turning tool according to one of the claims 1 to 3, characterized in that the main cutting edge (12) extends straight, slightly concavely, slightly concavely with a recessed center region, or with convex curvatures in the region of the cutting corners and concave curvatures in or near the center region.

5. The recessing turning tool according to one of claims 1 to 4, characterized in that the cutting face (11) increases smoothly in the chip travel region at least in the regions offset from the cutting edge and/or that the cutting face (11) at first rises at the edges perpendicular to the main cutting edge, then runs through a minimum, and finally again rises to a chip-forming step.

6. The recessing turning tool according to one of claims 1 to 5, characterized in that the cutting face (11) seen perpendicular to the main cutting edge in the central region at first descends continuously, then runs through a minimum, and finally again rises to a chip-forming step, whereby preferably at least a part of the descending flank of the cutting face (11) extends in a straight line seen in the chip-travel direction.

7. The rotary boring tool according to one of claims 1 to 6, characterized in that the chamfer angle increases continuously from the sides to the center of the cutting edge, whereby preferably the increase Δγ is between 2° and 20° over 1/10 to 1/2 of the recessing width (L), preferably 8° to 18° over 1/10 to 1/15 of the recessing width (L).

8. The recessing turning tool according to claim 7, characterized in that the chamfer angle lies at the lateral corners between -30° and +20°, preferably between -15° and +5°, whereby the chamfer angle preferably changes from the corner to the cutting-edge center from a negative value to a positive value.

9. The recessing turning tool according to one of claims 1 to 8, characterized in that chamfer angles lying at the same distance from the center of the cutting edge to opposite sides have different values, whereby preferably the difference of the values is between 1° and 10°, preferably 3° and 6°, in particular when used with attack angles of the recessing cutter not equal to 90°.

10. The recessing turning tool according to one of claims 1 to 9, characterized in that the cutting face has one or more chip-forming elements, preferably a central rib, whose longitudinal axis extends in the direction of a perpendicular to the cutting edge.

## Revendications

1. Outil de tournage à saigner, en particulier corps de coupe pour la fixation amovible dans un support, comportant un tranchant principal (12) sur la face d'about et deux tranchants secondaires (13, 14), une face de coupe (11) réalisée de façon courbée avec une région de montée donnée dans la direction d'écoulement des copeaux par rapport au plan de tranchant principal ou par rapport à une région abaissée de face de coupe ainsi qu'avec une section transversale de face de coupe perpendiculaire à la direction d'écoulement des copeaux, qui présente du moins sur une portion du trajet d'écoulement des copeaux vers les flancs latéraux (112, 113) respectivement des crêtes par rapport à la région centrale (111),
**caracterisé par le fait**
que le tranchant principal (12) est suivi d'un chanfrein torsadé dont l'angle devient plus grand depuis chacun des coins latéraux vers le milieu du tranchant, et que la forme de section transversale de la face de coupe est constante dans la direction d'écoulement des copeaux sur une première région située près du tranchant et/ou sur une deuxième région d'écoulement des copeaux se trouvant dans la région de montée, mais qu'elle peut varier dans les régions restantes.

2. Outil de tournage à saigner selon la revendication 1, caractérisé par le fait que le contour de section transversale s'étend de manière symétrique par rapport à une normale au milieu du tranchant principal et/ou que la face de coupe débouche, dans la direction d'écoulement des copeaux, dans un gradin à former le copeau (29) qui présente une partie centrale abaissée et, par rapport à cela, dans la région marginale, des régions (30, 31) élevées.

3. Outil de tournage à saigner selon l'une des revendications 1 ou 2, caractérisé par le fait que les flancs latéraux (112, 113) descendant vers la région centrale abaissée (111) de la face de coupe se rapprochent l'un de l'autre dans la direction d'écoulement des copeaux et rétrécissent la région centrale (111), de préférence, dans le cas de largeurs à saigner comprises entre 2 mm et 12 mm, le rétrécissement étant compris entre 0.3 mm et 3 mm ou entre 5% et 25% de la largeur à saigner (L) et/ou la région rétrécie commençant à une distance par rapport au tranchant principale comprise entre 0 mm et 4 mm ou jusqu'à 30% de la largeur à saigner (L) et/ou s'étendant sur une longueur minimale de 0.3 mm à 5 mm ou de 10% à 40% de la largeur à saigner (L).

4. Outil de tournage à saigner selon l'une des revendications 1 à 3, caractérisé par le fait que le tranchant principal (12) s'étend de manière rectiligne, légèrement concave, légèrement concave avec une région centrale abaissée ou avec des courbures convexes dans la région des coins de coupe et des courbures convaces dans ou vers la région centrale.

5. Outil de tournage à saigner selon l'une des revendications 1 à 4, caractérisé par le fait que la face de coupe (11) monte constamment dans la direction d'écoulement des copeaux, du moins dans des régions situées loin du tranchant et/ou que la face de coupe (11), considéré perpendiculairement au tranchant principal, monte d'abord aux côtés marginaux, puis, traverse un creux et remonte enfin jusqu'à un gradin à former le copeau.

6. Outil de tournage à saigner selon l'une des revendications 1 à 5, caractérisé par le fait que la face de coupe (11) dans la région centrale, considéré perpendiculairement au tranchant principal, descend d'abord de manière continue, traverse un creux et remonte enfin jusqu'à un gradin à former le copeau, de préférence, une partie du moins du flanc descendant de la face de coupe (11), considéré dans la direction d'écoulement des copeaux, s'étendant en ligne droite.

7. Outil de tournage à saigner selon l'une des revendications 1 à 6, caractérisé par le fait que l'angle du chanfrein devient continuellement plus grand depuis les côtés vers le milieu du tranchant, l'augmentation Δγ étant de préférence comprise entre 2° et 20° sur 1/10 jusqu'à 1/2 de la largeur à saigner (L), de préférence entre 8° et 18° sur 1/10 jusqu'à 1/5 de la largeur à saigner (L).

8. Outil de tournage à saigner selon la revendication 7, caractérisé par le fait que l'angle du chanfrein est, aux coins latéraux, compris entre -30° et +20°, de préférence entre -15° et +5°, l'angle du chanfrein passant de préférence depuis le coin vers le milieu du tranchant d'une valeur négative à une valeur positive.

9. Outil de tournage à saigner selon l'une des revendications 1 à 8, caractérisé par le fait que des angles du chanfrein se trouvant respectivement à une distance égale par rapport au milieu du tranchant de côtés opposés présentent des valeurs différentes, de préférence, la différence des valeurs étant comprise entre 1° et 10°, de préférence entre 3° et 6°, en particulier dans le cas d'une utilisation avec des angles d'attaque du tranchant à saigner différents de 90°.

10. Outil de tournage à saigner selon l'une des revendications 1 à 9, caractérisé par le fait que la face de coupe présente un ou plusieurs élément(s) à former le copeau, de préférence une nervure centrale dont l'axe longitudinal s'étend dans la direction d'une normale au tranchant.
